# EUROPÄISCHE PATENTSCHRIFT

(11) **EP 3 887 008 B1**
(45) Veröffentlichungstag und Bekanntmachung des Hinweises auf die Patenterteilung: **28.12.2022**
(21) Anmeldenummer: 19727598.5
(22) Anmeldetag: 21.05.2019
(51) Int. Cl.: A63F 13/795, A63F 13/65, A63F 13/216, G01C 21/26

(54) **VERFAHREN ZUM BETREIBEN EINER VIRTUELLE-REALITÄT-AUSGABEVORRICHTUNG, SYNCHRONISIEREINRICHTUNG, KRAFTFAHRZEUG**
METHOD FOR OPERATING A VIRTUAL-REALITY OUTPUT DEVICE, SYNCHRONISATION UNIT, MOTOR VEHICLE
PROCÉDÉ POUR FAIRE FONCTIONNER UN DISPOSITF DE SORTIE DE RÉALITÉ VIRTUELLE, DISPOSITIF DE SYNCHRONISATION, VÉHICULE À MOTEUR

(30) Priorität: 30.11.2018 DE 102018220685
(43) Veröffentlichungstag der Anmeldung: 06.10.2021
(73) Patentinhaber: Audi AG, 85045 Ingolstadt (DE)
(72) Erfinder: PROFENDINER, Daniel, 85049 Ingolstadt (DE)
(74) Vertreter: Hofstetter, Schurack & Partner
(86) Internationale Anmeldenummer: PCT/EP2019/063017
(87) Internationale Veröffentlichungsnummer: WO 2020/108803

(56) Entgegenhaltungen:
- DE-A1-102014 214 514
- US-A1- 2014 295 963
- US-A1- 2018 283 885

## Beschreibung

Die Erfindung betrifft Verfahren zum Betreiben einer Virtuelle-Realität-Ausgabevorrichtung, die einem ersten Kraftfahrzeug zugeordnet ist. Unter einer Virtuelle-Realität-Ausgabevorrichtung wird ein Ausgabegerät zum Erzeugen einer Virtuellen Realität verstanden, und um so ein Gefühl einer Immersion zu erzeugen. Das Ausgabegerät kann dabei eine virtuelle Realität erzeugen und/oder bereitstellen, und zum Beispiel als Virtuelle-Realität-Brille ("VR-Brille"), Shutterbrille, Datenbrille oder Head-mounted-Display ausgestaltet sein.

Um eine "Motion Sickness" (Reisekrankheit) bei einem hochimmersiven Unterhaltungssystem im Fahrzeug zu reduzieren, sind Systeme zur Nutzung einer virtuellen Realität ("Virtual Reality", "VR") im Fahrzeug bekannt. Die Reisekrankheit kann entstehen, wenn zum Beispiel eine Bewegung des realen Fahrzeugs nicht mit einer Fahrbewegung einer virtuellen Realität übereinstimmt.

Um jedoch Anwendungsmöglichkeiten bereitzustellen, bei denen mehrere Spieler zusammen spielen können, so genannte Multiplayer Use Cases, muss man sich einzigartigen Herausforderungen stellen. Die Bewegung eines virtuellen Fahrzeugs entspricht der Bewegung des realen Fahrzeugs mit Bezug zur realen Straße, die durch eine Navigationsroute des Fahrzeugs repräsentiert wird. Die Spieler müssen also im gleichen Fahrzeug sitzen.

Die DE 10 2016 104 337 A1 beschreibt ein Verfahren zur Positionsbestimmung und ein Verfahren zur Ausrichtung wenigstens eines Virtual Reality Headsets in Fahrgeschäften.

Aus der DE 10 2014 111 386 A1 ist ein Verfahren zum Betreiben eines Fahrgeschäftes, insbesondere einer Achterbahn bekannt, bei dem mittels eines fahrgeschäftsspezifischen Computerprogramms eine einer Fahrt mit dem Fahrzeug entsprechende virtuelle Realität erzeugt und auf einer dem Fahrgast eines Fahrzeugs zugeordneten Head-mounted-Displays in Abhängigkeit der Position des Fahrzeugs auf der Fahrstrecke sowie in Abhängigkeit der Position und/oder der Ausrichtung des Head-mounted-Displays dargestellt wird.

Die DE 10 2015 004 749 A1 beschreibt ein Verfahren zum Betreiben einer Virtual-Reality-Brille, bei welchem jeweilige Beobachtungspositionen korrespondierend zu einer fortlaufend erfassten Position der Virtual Reality Brille vorgegeben werden.

Der Stand der Technik beschreibt entweder die technischen Grundlagen von Virtual-Reality-Brillen für einen einzelnen Spieler oder ein gemeinsames immersives Erlebnis in einem Achterbahnwagen. Der Stand der Technik bietet jedoch keine Lösung für mehrere Spieler, die die gleiche virtuelle Realität teilen möchten, jedoch in unterschiedliche Fahrzeugen unterwegs sind. Insbesondere in den Fällen, in denen unterschiedliche Fahrzeuge unterschiedliche Zielorte haben, also auf unterschiedlichen Navigationsrouten unterwegs sind, bietet der Stand der Technik keine Lösung zum Reduzieren einer Wahrscheinlichkeit, reisekrank zu werden.

Eine der Erfindung zugrunde liegende Aufgabe ist das Bereitstellen eines Systems und eines Verfahrens zum Synchronisieren einer virtuellen Realität für mehrere Benutzer eines Virtuelle-Realität-Systems, die in verschiedenen Kraftfahrzeugen unterwegs sind.

Die gestellte Aufgabe wird durch das erfindungsgemäße Verfahren und die erfindungsgemäßen Vorrichtungen gemäß der nebengeordneten Patentansprüche gelöst. Vorteilhafte Weiterbildungen sind durch die Unteransprüche gegeben.

Die Erfindung basiert auf der Idee, die Navigationsrouten der beiden Fahrzeuge, beziehungsweise deren Repräsentation in der virtuellen Realität, so zu transformieren, dass sie kompatible Trajektorien darstellen. Dadurch werden Anwendungsmöglichkeiten ermöglicht, in denen mehrere Spieler, die auf mehrere Kraftfahrzeuge verteilt sind, das gleiche Virtuelle-Realität-System nutzen können. Dies funktioniert auch bei Spielern, die in ihren Kraftfahrzeugen nicht dieselben Navigationsrouten befahren. Zur Umsetzung von kooperativen Multiplayer-Erfahrungen werden die Bewegungen verschiedener Fahrzeuge "synchronisiert" oder adaptiert, damit sich die Fahrzeuge in virtuellen Realität "sehen" und gemeinsam zum Beispiel ein Spiellevel bestreiten.

Das erfindungsgemäße Verfahren zum Betreiben einer Virtuelle-Realität-Ausgabevorrichtung, die einem ersten Kraftfahrzeug zugeordnet ist, zum Beispiel mit einem ersten Kraftfahrzeug gekoppelt ist, weist die folgenden Verfahrensschritte auf, die durch eine Synchronisiereinrichtung durchgeführt werde. Unter einer Synchronisiereinrichtung wird dabei ein Gerät, eine Gerätekomponente oder ein Gerätesystem verstanden, das/die zum Bereitstellen der virtuellen Realität ausgestaltet ist und hierzu Signale empfangen und auswerten kann, sowie basierend auf diesen Signalen zum Beispiel eine Ausgabedatei und/oder ein Ausgabesignal bereitstellen kann. Die Synchronisiereinrichtung kann vorzugsweise eine Komponente der Virtuelle-Realität-Ausgabevorrichtung und/oder des Kraftfahrzeugs sein.

Zunächst erfolgt ein Feststellen einer geplanten Navigationsroute des ersten Kraftfahrzeugs, die im Folgenden als Referenz-Navigationsroute bezeichnet wird. Das Feststellen der geplanten Navigationsroute kann zum Beispiel durch Abfragen einer aktivierten oder gespeicherten Navigationsroute eines Navigationsgeräts erfolgen.

Es erfolgt ein Festlegen eines zweiten Kraftfahrzeugs und/oder einer zweiten Virtuelle-Realität-Ausgabevorrichtung, die dem zweiten Kraftfahrzeug zugeordnet ist, zum Beispiel mit dem zweiten Kraftfahrzeug gekoppelt ist. Das Festlegen des zweiten Kraftfahrzeugs erfolgt in Abhängigkeit davon, ob eine geplante Navigationsroute des zweiten Kraftfahrzeugs eine vorgegebene Synchronisationsbedingung erfüllt. Vorbereitend hierzu kann zum Beispiel eine entsprechende Information zu einer Navigationsroute des zweiten Kraftfahrzeugs über eine Internetverbindung oder eine Kraftfahrzeug-zu-Kraftfahrzeug-Kommunikationsverbindung durchgeführt werden.

Die Synchronisationsbedingung gibt vor, dass eine Dauer einer Fahrt des zweiten Kraftfahrzeugs auf dessen Navigationsroute innerhalb eines vorgegebenen Toleranzbereichs um eine Referenz-Reisedauer einer Fahrt des ersten Kraftfahrzeugs auf der Referenz-Navigationsroute liegt. Beispielhaft kann die Referenz-Reisedauer, also die voraussichtliche Dauer der Fahrt des ersten Kraftfahrzeugs auf der Referenz-Navigationsroute, anhand der Navigationsroute des ersten Kraftfahrzeugs ermittelt oder eine entsprechende Information aus dem Navigationsgerät abgerufen werden. Der Toleranzbereich kann in Abhängigkeit von der Referenz-Reisedauer vorgegeben werden, und zum Beispiel eine Reisedauer von einer Fahrt, die zum Beispiel fünf Minuten kürzer ist als die Referenz-Reisedauer, bis zu einer Reisedauer, die fünf Minuten länger dauert als die Referenz-Reisedauer, beschreiben. Mit anderen Worten kann der vorgegebenen Toleranzbereich die Referenz-Reisedauer, also die Dauer der Reise des ersten Kraftfahrzeugs, umfassen. Umfasst der vorgegebene Toleranzbereich auch die Dauer der Fahrt des zweiten Kraftfahrzeugs auf dessen Navigationsroute, ist die vorgegebene Synchronisationsbedingung erfüllt.

Das Festlegen des zweiten Kraftfahrzeugs, das die vorgegebene Synchronisationsbedingung erfüllt, kann auch als "Matchmaking" bezeichnet werden.

Um das Erfüllen der vorgegebenen Synchronisationsbedingung zu überprüfen, kann die Synchronisiereinrichtung also zum Beispiel die Dauer für eine Fahrt des zweiten Kraftfahrzeugs auf dessen Navigationsroute feststellen oder berechnen und mit dem vorgegebenen Toleranzbereich vergleichen.

Durch die Synchronisiereinrichtung erfolgt ein Skalieren einer Streckenlänge der Navigationsroute des zweiten Kraftfahrzeugs auf eine Streckenlänge der Referenz-Navigationsroute. Unter einer Streckenlänge wird dabei eine Weglänge verstanden, die zum Beispiel in Kilometern vorgegeben sein kann. Der Skalierungsschritt umfasst, mit anderen Worten, also ein Anpassen einer tatsächlichen Streckenlänge der Navigationsroute des zweiten Kraftfahrzeugs auf eine tatsächliche Streckenlänge der Referenz-Navigationsroute, also der Navigationsroute des ersten Kraftfahrzeugs. Beispielhaft kann die Referenz-Navigationsroute, also die Navigationsroute des ersten Kraftfahrzeugs, eine Fahrt auf einer Autobahn beschreiben, während die Navigationsroute des zweiten Kraftfahrzeugs zwar innerhalb des vorgegebenen Toleranzbereichs liegen kann, kann jedoch eine Navigationsroute auf hauptsächlich Landstraßen beschreiben und deswegen in Bezug auf die Streckenlänge oder Weglänge sehr viel kürzer sein als die Referenz-Navigationsroute.

Es erfolgt, durch die Synchronisiereinrichtung, ein Festlegen von mindestens einem synchronisierbaren Streckenabschnitt der Referenz-Navigationsroute, wobei der Streckenabschnitt ein vorgegebenes Homogenitätskriterium erfüllt. Das vorgegebene Homogenitätskriterium gibt ein vorgegebenes Mindestmaß an Übereinstimmung eines Streckenverlaufs des Streckenabschnitts der Referenz-Navigationsroute mit einem Streckenverlauf eines Streckenabschnitts der skalierten Navigationsroute vor. Mit anderen Worten ist das vorgegebene Homogenitätskriterium für den Streckenabschnitt der Referenz-Navigationsroute erfüllt, falls ein Streckenabschnitt der Navigationsroute des zweiten Kraftfahrzeugs einen Streckenabschnitt aufweist, dessen Streckenverlauf zum Beispiel zu mindestens 80 Prozent mit dem Streckenverlauf des Streckenabschnitts der Referenz-Navigationsroute übereinstimmt. Unter einem Streckenverlauf wird dabei ein Richtungsverlauf des Streckenabschnitts verstanden, also zum Beispiel eine Linkskurve gefolgt von einem 500 Meter langen gradlinigen Verlauf, der dann zum Beispiel von einer Rechtskurve gefolgt werden kann.

Es folgt ein Zuordnen des Streckenabschnitts der skalierten Navigationsroute zu dem synchronisierbaren Streckenabschnitt, also zu dem Streckenabschnitt der Referenz-Navigationsroute, der das vorgegebene Homogenitätskriterium erfüllt. Beim Zuordnen des Streckenabschnitts der skalierten Navigationsrouten zu dem synchronisierbaren Streckenabschnitt werden so Paare von Streckenabschnitten festgestellt oder gebildet.

Der Schritt des Zuordnens des Streckenabschnitts der skalierten Navigationsroute zu dem synchronisierbaren Streckenabschnitt kann zum Beispiel ein Unterteilen der Navigationsrouten in Sektionen, ein "Schneiden" der skalierten Navigationsroute und ein streckenabschnittsweises Adaptieren an die Referenz-Navigationsroute umfassen. Idealerweise können dabei mehrere Streckenabschnitts-Paare ermittelt werden. Auf diese Weise kann ein Mapping beider Navigationsrouten auf äquivalente Sektionen erfolgen. Mit anderen Worten kann ein Mapping auf den Streckenverlauf der Navigationsroute des ersten Kraftfahrzeugs erfolgen. Das zweite Kraftfahrzeug kann so während der Fahrt in eine vergleichbare Position in Bezug auf die Gesamtstrecke, also in Bezug auf die Referenz-Navigationsroute, gebracht werden.

Mit anderen Worten werden die Navigationsrouten in gleiche oder ähnliche Teile, also Streckenabschnitte, "zerschnitten" oder eingeteilt. Die virtuelle Realität wird dann als gemeinsame Welt bereitgestellt, die auf den verschiedenen Navigationsrouten basiert. Für die Spieler fühlt es sich so an, als ob der jeweils andere Spieler die gleiche virtuelle Route (und damit die gleiche reale Route) fährt, das heißt in der gleichen virtuellen Welt fährt.

Es erfolgt ein Bereitstellen eines Ausgabeinhalts, der eine virtuelle Reise auf einer virtuellen Navigationsroute beschreibt, die die Referenz-Reisedauer und den Streckenverlauf der Referenz-Navigationsroute repräsentiert. Der Ausgabeinhalt kann vorzugsweise zum Ausgeben durch die Virtuelle-Realität-Ausgabevorrichtung während der Fahrt des ersten Kraftfahrzeugs bereitgestellt werden, zum Beispiel in Form einer Ausgabedatei. Der Ausgabeinhalt kann zum Beispiel ein VR-Spiel sein, in dem sich ein Ego-Fahrzeug, zum Beispiel ein Raumschiff, durch den Weltraum bewegt, wobei die Navigationsroute des Ego-Fahrzeugs den gleichen Streckenverlauf haben kann wie die Referenz-Navigationsroute.

Falls sich das erste Kraftfahrzeug auf einem synchronisierbaren Streckenabschnitt und das zweite Kraftfahrzeug sich auf dem dem synchronisierbaren Streckenabschnitt zugeordneten Streckenabschnitt der skalierten Navigationsroute befinden, erfolgt ein Ändern des bereitgestellten Ausgabeinhalts, wobei der geänderte Ausgabeinhalt einen Avatar beschreibt, der das zweite Kraftfahrzeug und eine erfasste Kraftfahrzeugbewegung des zweiten Kraftfahrzeugs repräsentiert. Unter einem Avatar des zweiten Kraftfahrzeugs wird eine Computeranimation oder andersartige virtuelle Repräsentation des zweiten Kraftfahrzeugs verstanden. Mit anderen Worten zeigt dann der Ausgabeinhalt eine Repräsentation des zweiten Kraftfahrzeugs, zum Beispiel ein zweites Raumschiff, das aus Sicht des Ego-Kraftfahrzeugs zu sehen ist, das die gleichen Bewegungen ausführt wie das zweite Kraftfahrzeug aktuell auf der realen Navigationsroute des zweiten Kraftfahrzeugs.

Es ergeben sich die oben genannten Vorteile. Durch das erfindungsgemäße Verfahren werden Fahrzeugbewegungen des zweiten Kraftfahrzeugs auf eine Navigationsroute des ersten Kraftfahrzeugs, also des Kraftfahrzeugs des Benutzers der Virtuelle-Realität-Ausgabevorrichtung, abgebildet. Mit anderen Worten wird der Ausgabeinhalt, der die virtuelle Realität für einen Benutzer des ersten Kraftfahrzeugs beschreibt, dahingehend geändert oder bereitgestellt, dass der Ausgabeinhalt einen Inhalt beschreibt, in dem das andere, also das zweite Kraftfahrzeug, auf der virtuellen Navigationsroute des Ausgabeinhalts unterwegs ist. Mit anderen Worten wird eine virtuelle Realität bereitgestellt, die die realen Fahrbewegungen eines zweiten Kraftfahrzeugs, in dem sich der zweite Spieler befindet, zeigt, an die Fahrbewegung des ersten Kraftfahrzeugs angepasst. Mit anderen Worten wird eine Navigationsroute eines anderen Spielers in einem anderen Kraftfahrzeug, das sich auf einer anderen Navigationsroute befindet, auf eine virtuelle Realität des ersten Spielers in dem ersten Kraftfahrzeug abgebildet. Hierdurch wird einer Verwirrung deutlich vorgebeugt, weil die Bewegungen der eingeblendeten Repräsentation des zweiten Kraftfahrzeugs in der virtuellen Realität mit der Bewegung des Ego-Kraftfahrzeugs, dass das erste Kraftfahrzeug repräsentiert, synchronisiert wird. Vorteilhaft wird ein kohärentes Erlebnis für mehrere Spieler ermöglicht, wobei sich die Spieler in unterschiedlichen Kraftfahrzeugen und sogar auf unterschiedlichen Navigationsrouten befinden können. Dadurch werden zwei Welten in Einklang gebracht. Das Verfahren kann ideal auch für den zweiten Spieler ermöglicht werden, sodass sich beide Benutzer, die sich in unterschiedliche Kraftfahrzeugen befinden, in ein und derselben, in Einklang gebrachten virtuellen Realität befinden.

Um zu überprüfen, ob sich das erste Kraftfahrzeug auf dem synchronisierbaren Streckenabschnitt und ob sich das zweite Kraftfahrzeug auf dem dem synchronisierbaren Streckenabschnitt zugeordneten Streckenabschnitt der skalierten Navigationsroute befindet, kann die Synchronisiereinrichtung optional ein Feststellen einer aktuellen Position des ersten Kraftfahrzeugs auf der Referenz-Navigationsroute und/oder ein Feststellen einer aktuellen Position des zweiten Kraftfahrzeugs auf dessen Navigationsroute durchführen. Optional kann die Synchronisiereinrichtung zusätzlich ein Erfassen einer Kraftfahrzeugbewegung des zweiten Kraftfahrzeugs durchführen, optional ebenfalls ein Erfassen einer Kraftfahrzeugbewegung des ersten Kraftfahrzeugs.

Vorzugsweise kann beim oder nach dem Zuordnen des Streckenabschnitts der skalierten Navigationsroute zu dem synchronisierbaren Streckenabschnitt ein Feststellen einer Sequenz von Streckenabschnitten der Referenz-Navigationsroute und/oder der Navigationsroute des zweiten Kraftfahrzeugs erfolgen. Beim Zuordnen der Streckenabschnitte zu Streckenabschnittpaaren kann eine jeweilige Streckenabschnittsequenz eingehalten werden.

Das Verfahren kann vorzugsweise umfassen, dass die Synchronisiereinrichtung ein Ausgabesignal erzeugen kann, das den geänderten Ausgabeinhalt beschreiben kann. Die Synchronisiereinrichtung kann das erzeugte Ausgabesignal an die Virtuelle-Realität-Ausgabevorrichtung übertragen, sodass die Virtuelle-Realität-Ausgabevorrichtung das erzeugte Ausgabesignal empfangen und ausgeben kann.

Idealerweise kann das Festlegen des mindestens einen synchronisierbaren Streckenabschnitts dahingehend erfolgen, dass ein Festlegen mehrerer synchronisierbarer Streckenabschnitte erfolgen kann, wobei eine Sequenz oder Reihenfolge der den jeweiligen synchronisierbaren Streckenabschnitten zugeordneten Streckenabschnitte der skalierten Navigationsroute einer Sequenz der Streckenabschnitte der Referenz-Navigationsroute entsprechen kann. Mit anderen Worten wird nicht nur ein Paar von Streckenabschnitten gebildet, die aufeinander gemappt wurden, sondern mehrere solche Paare von Streckenabschnitten. Dadurch wird das Virtuelle-Realität-Erlebnis noch immersiver, denn eine hohe Anzahl an adaptierten Streckenabschnitten beider Navigationsrouten verbessert eine Durchgängigkeit des gemeinsamen Erlebnisses und der gemeinsamen Immersion.

Idealerweise können das Skalieren und/oder das Festlegen des mindestens einen Streckenabschnitts vor Beginn der Fahrt des ersten Kraftfahrzeugs durchführt werden, optional zusätzlich vor Beginn der Fahrt des zweiten Kraftfahrzeugs. Das gemeinsame Erlebnis beginnt somit bereits mit Fahrtbeginn.

Um das Erlebnis beider Spieler zu verbessern, indem auf situationsspezifische Änderungen auf der Fahrt eines oder beider der Kraftfahrzeuge reagiert wird, kann, gemäß einer weiteren Ausführungsform des erfindungsgemäßen Verfahrens, ein Feststellen einer Geschwindigkeitsänderung des ersten Kraftfahrzeugs und/oder Feststellen einer Geschwindigkeit des zweiten Kraftfahrzeugs erfolgen. Vorzugsweise kann es sich dabei jeweils um eine aktuelle Geschwindigkeit handeln. Dieser Schritt kann durch die Synchronisiereinrichtung durchgeführt werden. Befindet sich zum Beispiel das zweite Kraftfahrzeug auf einmal in einem Stau, kann das langsamere Vorankommen des Kraftfahrzeugs in die virtuelle Realität mit eingebunden werden. Gemäß dieser Ausführungsform erfolgt das Skalieren der Navigationsroute des zweiten Kraftfahrzeugs bei einer und in Abhängigkeit von der festgestellten Geschwindigkeitsänderung. Mit anderen Worten erfolgt das Skalieren der Navigationsroute der zweiten Kraftfahrzeugs dynamisch.

Besonders gut geeignet für ein Mapping von Streckenabschnitten ist eine Ausführungsform des Verfahrens, bei der der synchronisierbare Streckenabschnitt keine Richtungsänderung und/oder keine Kurve aufweist.

Das vorgegebene Homogenitätskriterium kann vorzugsweise einen Grenzwert für eine Kurvigkeit der Navigationsrouten beschreiben; und/oder einen Grenzwert für einen Abstand übereinander gelegter Streckenverläufe der Navigationsrouten zueinander.

Gemäß einer weiteren Ausführungsform des erfindungsgemäßen Verfahrens kann die Synchronisiereinrichtung, falls diese feststellt, dass sich das erste Kraftfahrzeug nicht auf einem synchronisierbaren Streckenabschnitt befindet, ein Ändern des bereitgestellten Ausgabeinhalts dahingehend durchführen, wobei der geänderte Ausgabeinhalt anstelle des Avatars ein Anzeigeobjekt beschreiben kann, das sich unabhängig von der erfassten Kraftfahrzeugbewegung des zweiten Kraftfahrzeugs bewegt oder statisch erscheint. Mit anderen Worten wird die virtuelle Umgebung der virtuellen Navigationsroute mit einem Objekt oder mehreren Objekten gefüllt, die eine visuelle Abtrennung repräsentieren, sodass der Benutzer der VR-Ausgabevorrichtung nicht erwartet, die Repräsentation, also den Avatar, des zweiten Kraftfahrzeugs zu sehen. Der Avatar wird dann, mit anderen Worten, ausgeblendet. Der Benutzer der Virtuelle-Realität-Ausgabevorrichtung sieht also den Avatar des zweiten Kraftfahrzeugs nicht, was in der Situation, in der sich das erste Kraftfahrzeug auf einem nicht-synchronisierbaren Streckenabschnitt befindet, vorteilhaft äußert, denn das zweite Kraftfahrzeug führt mit hoher Wahrscheinlichkeit gerade eine Kraftfahrzeugbewegung aus, die nicht zu der Kraftfahrzeugbewegung des ersten Kraftfahrzeugs und damit nicht zu einer Bewegung des Ego-Kraftfahrzeugs passt. Dadurch wird eine Verwirrung des Benutzers der Virtuelle-Realität-Ausgabevorrichtung deutlich verringert oder sogar ganz vorgebeugt.

Mit anderen Worten wird der Avatar des zweiten Kraftfahrzeugs nicht eingeblendet, wenn das zweite Kraftfahrzeug auf einem Streckenabschnitt ist, der einen anderen Streckenverlauf als derjenige Streckenverlauf hat, auf dem sich das zweite Kraftfahrzeug befindet. Der Benutzer des ersten Kraftfahrzeugs wird also nicht dadurch verwirrt, dass er eine Repräsentation des zweiten Kraftfahrzeugs sieht, das Bewegungen macht, die nicht zu seiner virtuellen Navigationsroute passen.

Vorzugsweise kann die Synchronisiereinrichtung das erfindungsgemäße Verfahren zusätzlich für eine zweite Virtuelle-Realität-Ausgabevorrichtung durchführen, die dem zweiten Kraftfahrzeug zugeordnet ist. Die Navigationsroute des zweiten Kraftfahrzeugs kann dann die Referenz-Navigationsroute sein, und die Navigationsroute des ersten Kraftfahrzeugs kann dann in Streckenabschnitte unterteilt werden, die an Streckenabschnitte dieser Referenz-Navigationsroute adaptiert werden. Mit anderen Worten kann das erfindungsgemäße Verfahren analog für die Virtuelle-Realität-Ausgabevorrichtung des zweiten Kraftfahrzeugs durchgeführt werden.

Die oben gestellte Aufgabe wird gelöst durch eine Synchronisiereinrichtung, die dazu eingerichtet ist, eine der oben beschriebenen Ausführungsformen des erfindungsgemäßen Verfahrens durchzuführen. Die Synchronisiereinrichtung kann zum Beispiel als Steuerchip oder Steuerplatine des Kraftfahrzeugs oder der Virtuelle-Realität-Ausgabevorrichtung oder eines kraftfahrzeugexternen Datenservers ausgestaltet sein. Die Synchronisiereinrichtung kann vorzugsweise eine Prozessoreinrichtung aufweisen, also ein Gerät oder eine Gerätekomponente zur elektronischen Datenverarbeitung, die mindestens einen Mikrocontroller und/oder mindestens einen Mikroprozessor aufweisen kann. In einem Datenspeicher, vorzugsweise einem Datenspeicher der Synchronisiereinrichtung, kann ein Programmcode abgelegt sein, der, bei Ausführung durch die Prozessoreinrichtung, die Synchronisiereinrichtung dazu veranlasst, eine Ausführungsform des erfindungsgemäßen Verfahrens durchzuführen.

Die oben gestellte Aufgabe wird durch ein Kraftfahrzeug gelöst, das eine Ausführungsform der erfindungsgemäßen Synchronisiereinrichtung aufweist. Das Kraftfahrzeug kann vorzugsweise als Kraftwagen ausgestaltet sein, zum Beispiel als Personenkraftwagen. Es ergeben sich die oben genannten Vorteile.

Zu der Erfindung gehören auch Weiterbildungen des erfindungsgemäßen Kraftfahrzeug und der erfindungsgemäßen Synchronisiereinrichtung, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen hier nicht noch einmal beschrieben.

Die Aufgabe wird außerdem durch eine Virtuelle-Realität-Ausgabevorrichtung gelöst, die eine Ausführungsform der erfindungsgemäßen Synchronisiereinrichtung aufweist.

Die oben gestellte Aufgabe wird ebenfalls gelöst durch eine Datenservereinrichtung zum Betreiben im Internet, die eine Ausführungsform der erfindungsgemäßen Synchronisiereinrichtung aufweist.

Das erfindungsgemäße Verfahren kann auch als computerimplementiertes Verfahren oder als von einem Computer ausgeführtes Verfahren bezeichnet werden.

Die gestellte Aufgabe wird gelöst durch eine Vorrichtung und/oder ein System zur Datenverarbeitung, umfassend Mittel zum Ausführen der Ausführungsformen des erfindungsgemäßen Verfahrens. Die Aufgabe wird ebenfalls gelöst durch ein Computerprogrammprodukt, umfassend Befehle, die bei Ausführen des Programms durch einen Computer diesen veranlassen, eine der Ausführungsformen des erfindungsgemäßen Verfahrens auszuführen. Die gestellte Aufgabe wird ebenfalls gelöst durch ein computerlesbares Speichermedium, umfassend Befehle, die bei Ausführen durch einen Computer diesen veranlassen, eine Ausführungsform des erfindungsgemäßen Verfahrens auszuführen.

Die Erfindung umfasst auch die Kombinationen der Merkmale der beschriebenen Ausführungsformen.

Im Folgenden sind Ausführungsbeispiele der Erfindung beschrieben. Hierzu zeigt:
- Fig. 1: eine schematische Darstellung zu einem Ausführungsbeispiel des erfindungsgemäßen Verfahrens;
- Fig. 2: eine weitere schematische Darstellung zu dem Ausführungsbeispiel;
- Fig. 3: eine weitere schematische Darstellung zu dem Ausführungsbeispiel;
- Fig. 4: eine weitere schematische Darstellung zu dem Ausführungsbeispiel;
- Fig. 5: eine weitere schematische Darstellung zu dem Ausführungsbeispiel;
- Fig. 6: eine weitere schematische Darstellung zu dem Ausführungsbeispiel;
- Fig. 7: eine weitere schematische Darstellung zu dem Ausführungsbeispiel;
- Fig. 8: eine weitere schematische Darstellung zu dem Ausführungsbeispiel;
- Fig. 9: eine weitere schematische Darstellung zu dem Ausführungsbeispiel;
- Fig. 10: eine weitere schematische Darstellung zu dem Ausführungsbeispiel; und
- Fig. 11: eine weitere schematische Darstellung zu dem Ausführungsbeispiel.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

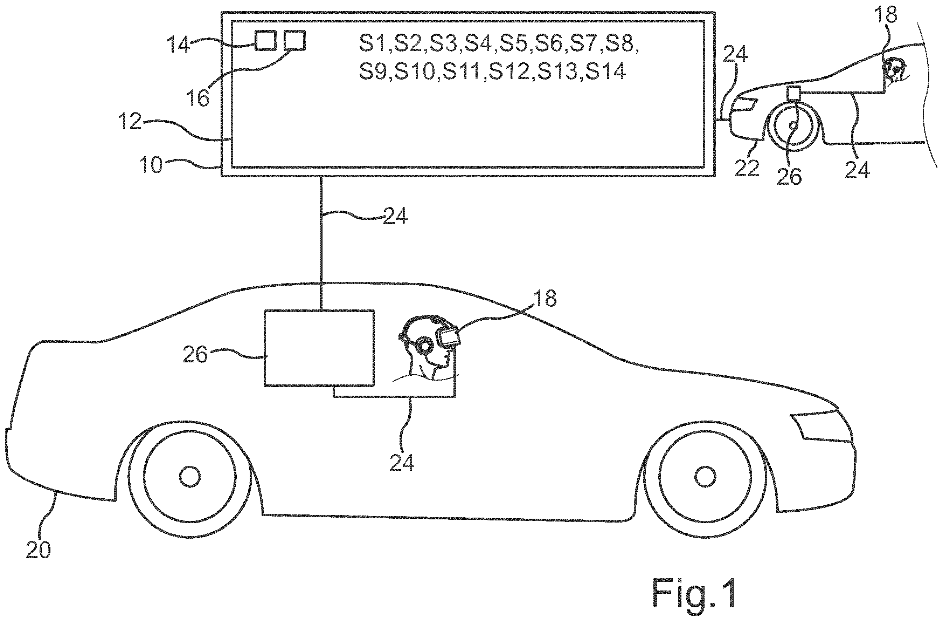

Die Fig. 1 veranschaulicht das Prinzip des erfindungsgemäßen Verfahrens und der erfindungsgemäßen Vorrichtungen anhand eines ersten Ausführungsbeispiels.

Hierzu zeigt die Fig. 1 beispielhaft eine kraftfahrzeugexterne Datenservereinrichtung 10, die im Beispiel der Fig. 1 eine Synchronisiereinrichtung 12 aufweisen kann. Die Datenservereinrichtung 10 kann zum Beispiel als Daten-Cloud, Datenserver oder Backend ausgestaltet sein.

Die Synchronisiereinrichtung 12 kann zum Beispiel eine Prozessoreinrichtung 14 mit mehreren Mikroprozessoren und/oder einen Datenspeicher 16, in dem ein Programmcode zum Durchführen des erfindungsgemäßen Verfahrens abgelegt sein kann, aufweisen. Alternativ zu der in der Fig. 1 gezeigten Ausgestaltung kann die Synchronisiereinrichtung 12 ein Bauteil oder eine Komponente einer Virtuelle-Realität-Ausgabevorrichtung 18 sein, die zum Beispiel als Shutter-Brille oder Head-Mounted-VR-Display ausgestaltet sein und von einem Beifahrer benutzt werden kann. In einer weiteren Alternative kann die Synchronisiereinrichtung 12 eine Komponente eines Kraftfahrzeugs 20 sein.

Im Beispiel der Fig. 1 ist ein erstes Kraftfahrzeug 20 gezeigt, das für eine Fahrt auf einer vorgegebenen Navigationsroute genutzt werden soll. In dem Beispiel der Fig. 1 kann die Virtuelle-Realität-Ausgabevorrichtung 18 zum Beispiel eine virtuelle Realität erzeugen, wobei Daten ausgegeben werden, die eine virtuelle Reise durch den Weltraum und die tatsächlichen Bewegungen des ersten Kraftfahrzeugs 20 beschreiben können. Die reale Fahrzeugbewegung kann dabei zum Beispiel in dem Ausgabeinhalt der virtuellen Realität als Bewegung eines virtuellen Raumschiffs als Ego-Fahrzeug repräsentiert werden. Wird zum Beispiel durch Navigationsdaten festgestellt, dass das erste Kraftfahrzeug 20 eine Kurve fährt, kann der Ausgabeinhalt der virtuellen Realität zum Beispiel beschreiben, dass das virtuelle Raumschiff einem Asteroiden entsprechend der realen Fahrzeugbewegung ausweicht.

Im Beispiel der Fig. 1 kann der Ausgabeinhalt zum Beispiel ein Spiel sein, das mehrere Spieler gleichzeitig spielen können. Ein weiterer Spieler kann sich im Beispiel der Fig. 1 zum Beispiel in einem zweiten Kraftfahrzeug 22 befinden und eine Fahrt in dem zweiten Kraftfahrzeug 22 geplant haben. Der zweite Spieler kann hierzu ebenfalls eine Virtuelle-Realität-Ausgabevorrichtung 18 benutzen. Da die beiden Spieler mit ihren Kraftfahrzeugen 20, 22 jedoch zum Beispiel unterschiedliche Navigationsrouten geplant haben, kann die Synchronisiereinrichtung 12 dazu verwendet werden, die Fahrt des zweiten Kraftfahrzeugs 22 auf die virtuelle Realität, die dem Benutzer des ersten Kraftfahrzeugs 20 durch seine Virtuelle-Realität-Ausgabevorrichtung 18 ausgegeben wird, abzubilden, und umgekehrt.

Die jeweilige Virtuelle-Realität-Ausgabevorrichtung 18 kann dem jeweiligen Kraftfahrzeug 20, 22 zugeordnet sein, beispielsweise durch jeweiliges Koppeln mittels einer Bluetooth-Verbindung (in der Fig. 1 nicht gezeigt). Die Kommunikation zwischen der Synchronisiereinrichtung 12 und der jeweiligen Virtuelle-Realität-Ausgabevorrichtung 18 kann über eine gängige Datenkommunikationsverbindung 24 erfolgen, zum Beispiel über eine Internetverbindung, WLAN-Verbindung oder Mobilfunkverbindung. Zur Datenkommunikation kann die Synchronisiereinrichtung mit einem Kommunikationsmodul ausgestaltet sein, zum Beispiel einem Mobilfunkmodul. Es kann jeweils eine Kommunikationseinrichtung 26 vorgesehen sein, wobei eine Kommunikationseinrichtung 26 eine Kommunikationseinrichtung 26 des jeweiligen Kraftfahrzeugs 20, 22 sein kann, oder der jeweiligen Virtuelle-Realität-Ausgabevorrichtung 18. Die Kommunikationseinrichtung 26 kann ebenfalls zum Beispiel als Mobilfunkmodul ausgestaltet sein oder ein solches aufweisen. Ist die jeweilige Kommunikationseinrichtung 26 zum Beispiel eine Komponente des jeweiligen Kraftfahrzeugs 20, 22, kann die Kommunikationseinrichtung 26 mit der Virtuelle-Realität-Ausgabevorrichtung 18 zum Beispiel über eine drahtgebundene Datenkommunikationsverbindung 24 kommunizieren, zum Beispiel über ein Kabel oder einen Datenbus, oder über eine drahtlose Datenkommunikationsverbindung 24.

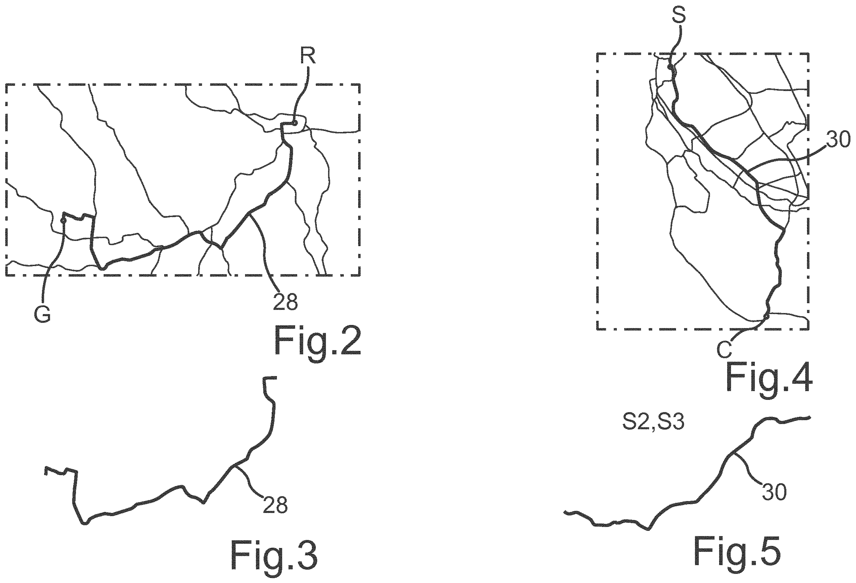

Das Verfahren kann vorzugsweise vor Beginn der Fahrten der Kraftfahrzeuge 20, 22 durchgeführt werden. Im Verfahrensschritt S1 wird zunächst eine geplante Navigationsroute des ersten Kraftfahrzeugs 20 als Referenz-Navigationsroute festgestellt. Hierzu kann die Synchronisiereinrichtung 12 die Navigationsroute zum Beispiel von einem Navigationsgerät des ersten Kraftfahrzeugs 20 abrufen, oder die Navigationsroute kann anhand von Reisedaten, also einem Startpunkt und einem Reiseziel, berechnet werden. Die Fig. 2 zeigt schematisiert den Verlauf der Navigationsroute 28 des ersten Kraftfahrzeugs 20, dessen geplante Fahrt zum Beispiel von Gaimersheim nach Regensburg führen kann. Der Startpunkt ist dabei in der Fig .2 mit G gekennzeichnet, das Reiseziel mit R. In der Fig. 3 ist die Referenz-Navigationsroute 28 dabei isoliert gezeigt, um den Streckenverlauf hervorzuheben. Dabei sind von dem Streckenverlauf die Richtungsänderungen beziehungsweise diejenigen Streckenabschnitte, in denen die Navigationsroute krümmungsfrei oder nahezu krümmungsfrei verläuft, gut zu erkennen.

Zum Festlegen des zweiten Kraftfahrzeugs 22 kann zum Beispiel in einer Datenbank, die zum Beispiel in dem Datenspeicher 16 abgespeichert sein kann, eine Vielzahl von dort abgelegten, geplanten oder aktuellen Navigationsrouten durchsucht und daraufhin überprüft werden, ob eine vorgegebene Synchronisationsbedingung erfüllt ist. Beispielhaft kann die vorgegebene Synchronisationsbedingung vorgeben, dass die Navigationsroute eines geeigneten zweiten Kraftfahrzeugs 22 in Bezug auf eine Fahrtdauer maximal fünf Minuten kürzer und/oder fünf Minuten länger als eine Reisedauer der Referenz-Navigationsroute 28 sein darf. Ein solcher Toleranzbereich kann beispielsweise durch eine Voreinstellung vorgegeben sein. Wie lange die Referenz-Reisedauer des ersten Kraftfahrzeugs 20 ist, wie lange also das erste Kraftfahrzeug 20 vermutlich für die Reise auf der Referenz-Navigationsroute 28 braucht, kann zum Beispiel von der Synchronisiereinrichtung 12 festgelegt werden, beispielsweise durch Auswerten der Daten der Navigationsroute, oder ein Wert der Referenz-Navigationsroute 28 kann von dem Navigationsgerät des Kraftfahrzeugs 20 ausgelesen oder zum Beispiel angefordert werden.

Das Überprüfen der gespeicherten Informationen zu Navigationsrouten vieler Fahrzeuge auf die vorgegebene Synchronisationsbedingung kann beispielsweise ergeben, dass das zweite Kraftfahrzeug 22, wie in der Fig. 1 gezeigt, eine Navigationsroute 30 plant oder durchführt, deren Reisedauer innerhalb des vorgegebenen Toleranzbereichs liegt. Die Navigationsroute 30 des zweiten Kraftfahrzeugs 22 ist zur Veranschaulichung in der Fig. 4 gezeigt, und kann zum Beispiel von San Francisco (S) nach Santa Cruz (C) führen. Das zweite Kraftfahrzeug 22 kann sich also zum Beispiel auf einem anderen Kontinent befinden als das erste Kraftfahrzeug 20, ein Benutzer des zweiten Kraftfahrzeugs 22 kann jedoch die virtuelle Welt mit dem Fahrer des ersten Kraftfahrzeugs 20 teilen, da seine Navigationsroute die Synchronisationsbedingung erfüllt und sein Kraftfahrzeug 22 als zweites Kraftfahrzeugs 22 im Verfahrensschritt S2 festgelegt wird. Die Fig. 5 zeigt dabei die Navigationsroute 30 des zweiten Kraftfahrzeug 22 noch einmal isoliert, um den Streckenverlauf hervorzuheben.

Dieser Vorgang des Festlegens des zweiten Kraftfahrzeugs 22 (S2) kann auch als "Matchmaking" bezeichnet werden. Mit anderen Worten wird beim Matchmaking ein passender Mitspieler gesucht und aufgrund einer ähnlichen Streckenlänge ausgewählt.

Beim Skalieren der Streckenlänge der Navigationsroute 30 des zweiten Kraftfahrzeugs 22 (S3) erfolgt eine Größenskalierung aufgrund der Referenz-Navigationsroute 28. Die Größenskalierung basiert dabei auf einer Weglänge oder Streckenlänge. Ein Skalierungsfaktor kann dabei vorgegeben sein und zum Beispiel auf die Gesamtstrecke angewendet werden, oder streckenabschnittsweise. Hierzu können zum Beispiel mehrere Streckenabschnitte festgelegt werden, und deren Reihenfolge oder Sequenz oder Abfolge der Streckenabschnitte (S4). Mit anderen Worten wird beim Skalieren S3 die Navigationsroute 30 des zweiten Kraftfahrzeugs 22 auf eine gleiche oder ähnliche Distanz wie die Referenz-Navigationsroute 28 skaliert.

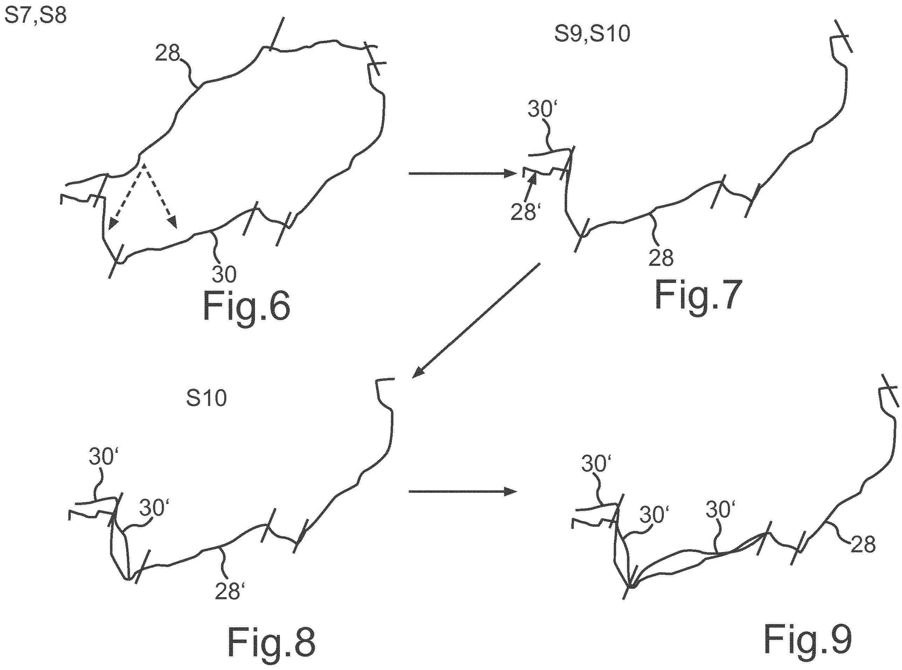

Im Verfahrensschritt S5 wird wenigstens ein Streckenabschnitt der Referenz-Navigationsroute 28 als synchronisierbarer Streckenabschnitt festgelegt. Hierzu wird ein vorgegebenes Homogenitätskriterium überprüft (S6). Mit anderen Worten werden in der Referenz-Navigationsroute 28 und in der Navigationsroute 30 des zweiten Kraftfahrzeugs 22 homogene Streckenabschnitte gesucht und gefunden, wobei jeweils ein Streckenabschnitt der Referenz-Navigationsroute 28 und ein Streckenabschnitt der Navigationsroute 30 des zweiten Kraftfahrzeugs 22 einander zugeordnet werden können. Im Beispiel der Fig. 1 kann das Homogenitätskriterium zum Beispiel vorgeben, dass ein jeweiliger Streckenverlauf der Streckenabschnitte zu mindestens 80 Prozent übereinstimmen. Zum Finden von solchen Streckenabschnitten können, zum Beispiel wie in der Fig. 6 dargestellt, die beiden Navigationsrouten 28, 30 miteinander vergleichen werden und in Sektionen unterteilt werden (S7), wodurch solche Streckenabschnitte gefunden werden können (S8). Die Streckenabschnitte sind dabei im Beispiel der Fig. 6 zur besseren Veranschaulichung durch schwarze Balken abgetrennt. Zu einem solchen Vergleich können beispielsweise Kartendaten verglichen werden, die die jeweilige Navigationsroute 28, 30 beschreiben können. Ein Streckenabschnitt der Navigationsroute 28 und ein Streckenabschnitt der Navigationsroute 30 können zum Beispiel homogenisierbar, also synchronisierbar sein, wenn zum Beispiel beide Streckenabschnitte harte Serpentinen umfassen, oder zum Beispiel jeweils eine lange gerade Strecke.

Es kann vorgesehen sein, dass ein Schneiden oder Unterteilen (S9) der Navigationsroute 30 erfolgen kann, wobei in der Fig. 7 ein erster Streckenabschnitt 30' gezeigt ist, der auf eine äquivalente Sektion gemappt sein kann. Mit anderen Worten kann der erste Streckenabschnitt der Navigationsroute 30, der Streckenabschnitt 30', einem ersten Streckenabschnitt 28' der Referenz-Navigationsroute 28 zugeordnet sein (S10). Dabei kann je nachdem, welcher der beiden Streckenabschnitte 28', 30' der kürzere ist, vorgeben, wann der nächste "Schnitt" kommt, also wann die andere Navigationsroute wieder in eine neue Sektion unterteilt wird. Bei dem Zuordnen S10, das auch als Mapping bezeichnet werden kann, können idealerweise weitere Streckenabschnitte zu entsprechenden Streckenabschnitten der Referenz-Navigationsroute 28 zugeordnet werden (S10). Die Fig. 8 zeigt dabei ein beispielhaftes Adaptieren, das heißt ein Zuordnen S10 mehrere Streckenabschnitte 30' der Navigationsroute 30 zu der Referenz-Navigationsroute 28. Eine Fortführung dieses Adaptierens ist in der Fig. 9 gezeigt.

Bei dem Vorgang des Adaptierens kann die Referenz-Navigationsroute 28 als "Master" bezeichnet werden, wobei die Referenz-Navigationsroute 28 unverändert bestehen bleibt, also die eigene Strecke mit dem eigenen Streckenverlauf wiedergibt. Mit anderen Worten werden beim "Schneiden" und beim anschließenden Zuordnen S10 homogenisierbare, also übereinstimmende Streckenabschnitte angepasst. Falls beispielsweise auf der Referenz-Navigationsroute des ersten Spielers eine Rechtskurve vorgesehen ist, bei dem zweiten Spieler aber eine Linkskurve, kann die Strecke "geschnitten" werden, das heißt die Streckenabschnitte können so zusammengelegt werden, wie Bauteile, sodass sie innerhalb eines Toleranzbereiches zusammenpassen können. Dabei können zum Beispiel Endpunkte markiert werden, die zum Beispiel Fahrereignisse umfassen können, zum Beispiel falls eine der Navigationsrouten durch einen Tunnel fährt. In diesem Fall kann zum Beispiel vorgesehen sein, dass bei eine Fahren auf diesem Streckenabschnitt der Avatar des jeweils anderen Kraftfahrzeugs 20, 22 im geänderten Ausgabeinhalt nicht "gesehen" werden kann, also nicht eingeblendet wird.

Der Ausgabeinhalt kann bereitgestellt werden, indem er zum Beispiel dem Datenspeicher 16 zur Verfügung gestellt werden kann (S11). Ist die Synchronisiereinrichtung 12 zum Beispiel eine Synchronisiereinrichtung 12 der Virtuelle-Realität-Ausgabevorrichtung 18, so kann das Bereitstellen des Ausgabeinhalts (S11) zum Beispiel durch Herunterladen oder Streamen von der Datenservereinrichtung 10 erfolgen.

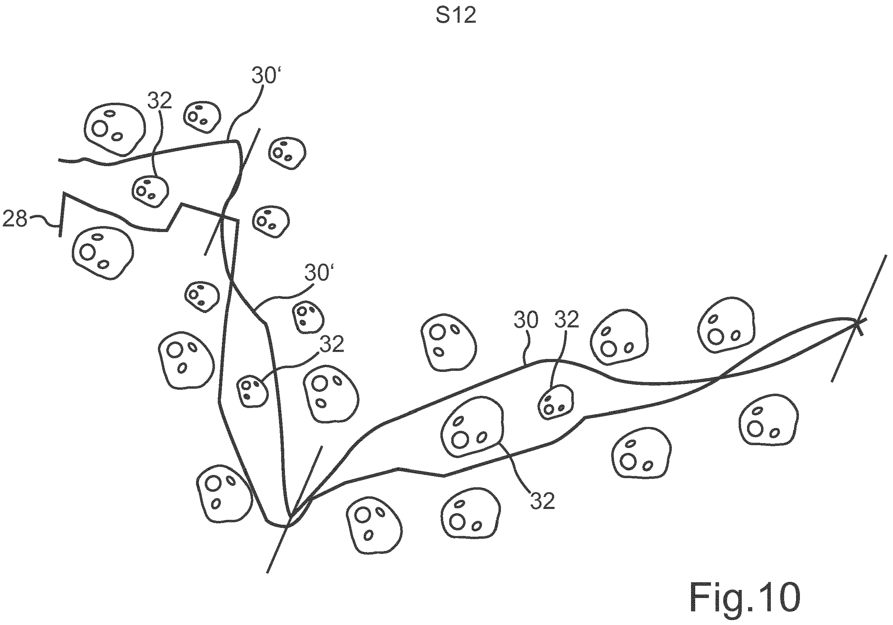

Die Fig. 10 zeigt die "gemappten" beziehungsweise adaptieren Streckenabschnitte 30' der Navigationsroute 30 des zweiten Kraftfahrzeugs 22, die an die Referenz-Navigationsroute 28 adaptiert wurden (S10). Die Fig. 10 veranschaulicht schematisch den Ausgabeinhalt, der beispielsweise durch eine Mediendaten festgehalten sein kann. In Abhängigkeit von den Navigationsrouten 28, 30 kann so ein bereits vorpräparierter Ausgabeinhalt im Verfahrensschritt S12 dahin geändert werden, dass an denjenigen Stellen der virtuellen Navigationsroute, die der Referenz-Navigationsroute 28 entspricht, an denjenigen Stellen Anzeigeobjekte 32 eingeblendet werden können, an denen die realen Navigationsrouten 28, 30 deutlich voneinander abweichen und nicht adaptierbar sind. Im Ausführungsbeispiel können die Anzeigeobjekte 32 zum Beispiel Darstellungen oder Repräsentationen von virtuellen Meteoriten sein, die sich in die beispielhafte Thematik oder Geschichte der virtuellen Realität inhaltlich einfügen.

Mit anderen Worten zeigt die Fig. 10 schematisch die Referenz-Navigationsroute 28 in ihrer Abbildung als virtuelle Navigationsroute der virtuellen Realität, und veranschaulicht diejenigen Stellen der virtuellen Navigationsroute, an denen die Streckenabschnitte 30' der Navigationsroute 30 nicht adaptierbar ist, der entsprechende Streckenabschnitt der Referenz-Navigationsroute 28 also nicht synchronisierbar ist. Durch das Einblenden der Anzeigeobjekte 32 kann so die virtuelle Realität "gefüllt" werden. Mit anderen Worten kann der Anzeigeinhalt der virtuellen Realität mit Anzeigeobjekte 32 "gefüllt" werden, beispielsweise bei einem Override der Fahrzeugbewegung des zweiten Kraftfahrzeugs 22 bei zum Beispiel Verbindungsstücken der Navigationsrouten, wobei beim Ausgeben der virtuellen Realität keine Interaktion des Ego-Fahrzeugs mit dem Avatar des anderen Kraftfahrzeugs 22 stattfindet, beziehungsweise der Avatar des anderen Kraftfahrzeugs 22 nicht sichtbar ist.

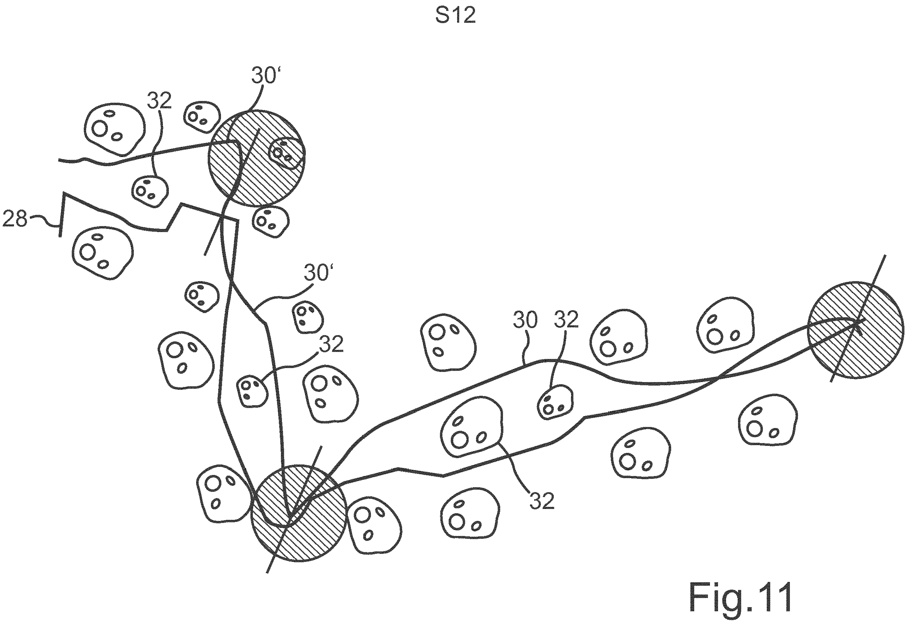

Die Fig. 11 veranschaulicht noch einmal schematisch den Vorgang des Änderns des Ausgabeinhalts (S12), wobei die Verbindungsstücke durch jeweils einen Kreis, also die Schnittpunkte der übereinander gelegten Navigationsrouten 28, 30, hervorgehoben sind.

Die oben genannten Verfahrensschritte oder zumindest das Skalieren S3 und das Festlegen von Streckenabschnitten als synchronisierbare Streckenabschnitte S5 können vorzugsweise dynamisch angepasst werden, falls eines oder beide der Kraftfahrzeuge 20, 22 nicht wie geplant auf der entsprechenden Navigationsroute 28, 30 vorankommen. Hierzu kann zum Beispiel eine aktuelle Geschwindigkeit des zweiten Kraftfahrzeugs 22 und/oder des ersten Kraftfahrzeugs 20 festgestellt werden (S13), und beim Feststellen, dass zum Beispiel das zweite Kraftfahrzeug 22 auf einmal langsamer fährt, kann dessen Navigationsroute 30 erneut skaliert werden (S3).

Im Verfahrensschritt S13 (Fig. 1) kann die Synchronisiereinrichtung 12 dann ein Ausgabesignal erzeugen, das den geänderten Ausgabeinhalt beschreibt, und dieses erzeugte Ausgabesignal kann im Verfahrensschritt S14 an zum Beispiel beide Virtuelle-Realität-Ausgabevorrichtungen ausgegeben werden.

Insgesamt veranschaulicht das Ausführungsbeispiel, wie durch die Erfindung ein Routen-/Spline-Matching für Multi-Car-Use-Cases bei einer In-Carvirtuellen Realität ermöglicht wird.

Gemäß einem weiteren Ausführungsbeispiel kann eine technische Umsetzung vorgesehen, dass ein System folgendermaßen umgesetzt werden kann:
1) Matchmaking: zum Beispiel zwei Kraftfahrzeuge 20, 22 fahren jeweils eine Navigationsroute 28, 30 mit ähnlicher zeitlicher Dauer (S1, S2);
2) Skalieren einer der beiden Navigationsrouten 28, 30 (S3), sodass sie vorzugsweise dieselbe Länge haben, dabei kann vorzugsweise ein Skalieren einer dreidimensionalen Navigationsroute 28, 30 einer Spiel-Engine mittels Skalierungsfaktor skaliert werden, wobei die beispielhafte Spiel-Engine durch die Synchronisiereinrichtung 12 realisiert werden kann;
3) Analyse beider Routen nach homogenisierbaren Streckenabschnitten (gleiche Routenabschnitte vorzugsweise ohne langfristige Richtungsänderung) (S5);
4) Schneiden der beiden Navigationsrouten 28, 30, vorzugsweise durch Zuordnen der Streckenabschnitte (S10); hierbei kann vorzugsweise die eigene Navigationsroute 28, 30 eines Spielers und/oder Kraftfahrzeugs 20, 22 immer der Master sein, also die Vorlage, welche nicht geschnitten wird, die Navigationsroute 30, 28 des Mitspielers die Client-Route: a) die Navigationsroute 30 des Mitspielerfahrzeugs 22 kann so geschnitten werden, dass sie der eigenen Navigationsroute 28 parallel folgen kann, hierbei können vorzugsweise ein oder mehrere Grenzwerte für eine Berechnung der Schnittpunkte genutzt werden, zum Beispiel eine Kurvigkeit und/oder Abstand der Routen voneinander, wobei vorzugsweise diese Grenzwerte parametrierbar sein können; und/oder b) die Navigationsroute 28, 30 kann immer geschnitten werden, wenn ein Ende eines homogenisierbaren (synchronisierbaren) Streckenabschnitts 30' der Client-Route oder der Master-Route beim Übereinanderlegen der Navigationsrouten 28, 30 erreicht ist;
5) Nach Homogenisieren der Navigationsrouten 28, 30, also nach dem Zuordnen S10, können Anzeigeobjekte 32 in der virtuellen Welt so platziert werden, dass weder Master- noch Client-Route diese schneiden;
6) Die Homogenisierung oder Zuordnung S10 kann auf beiden Kraftfahrzeugen 20, 22 stattfinden, hierbei kann jedoch vorzugsweise immer das eigene Kraftfahrzeug 20, 22 der Master, also die Vorlage sein;
7) Hierdurch können vorzugsweise Level auf beiden Kraftfahrzeugen 20, 22 entstehen, welche aufgrund der unterschiedlichen Master verschieden sind, jedoch aufgrund der gegenseitigen Homogenisierung (Zuordnung S10) "zusammen" spielbar sind; mit anderen Worten heißt das, dass die Spieler sich beziehungsweise den den anderen Spieler repräsentierenden Avatar gegenseitig sehen;
8) An Schnittpunkten (nach Schritt 4) ) kann im Live-Betrieb eine Kraftfahrzeugbewegung des Client-Fahrzeugs 22 in der virtuellen Realität nicht der Bewegung des Realfahrzeugs, also des ersten Kraftfahrzeugs 20, entsprechen, da durch den Schnitt Rotationen im Streckenverlauf erzeugt werden können; um hierdurch keine Brüche im erlebten Spiel zu erzeugen, können an den Schnittpunkten (durch die schwarzen Balken dargestellt) Anzeigeobjekte 32 in der virtuellen Realität eingefügt werden, die verhindern, dass sich die Spieler gegenseitig sehen (visuelle Abtrennung).

Die erfindungsgemäße Idee zeigt ein Konzept, mit welchem sich Multiplayer-Konzepte realisieren lassen, obwohl die Kraftfahrzeuge 20, 22 nicht physisch dieselbe Strecke oder Navigationsroute 28, 30 befahren. Hierzu erfolgt eine Funktion der Navigationsrouten 28, 30 und der Abgleich der virtuellen Welt.

## Patentansprüche

1. Verfahren zum Betreiben einer Virtuelle-Realität-Ausgabevorrichtung (18), die einem ersten Kraftfahrzeug (20) zugeordnet ist, wobei das Verfahren die folgenden, durch eine Synchronisiereinrichtung (12) durchgeführten Schritte aufweist:
- Feststellen einer geplanten Navigationsroute des ersten Kraftfahrzeugs (20) als Referenz-Navigationsroute (28, S1),
- Festlegen eines zweiten Kraftfahrzeugs (22), wobei eine geplante Navigationsroute (30) des zweiten Kraftfahrzeugs (22) eine vorgegebene Synchronisationsbedingung erfüllt; wobei die vorgegebene Synchronisationsbedingung vorgibt, dass eine Dauer einer Fahrt des zweiten Kraftfahrzeugs (22) auf dessen Navigationsroute (30) innerhalb eines vorgegebenen Toleranzbereichs um eine Referenz-Reisedauer einer Fahrt des ersten Kraftfahrzeugs (20) auf der Referenz-Navigationsroute liegt (28, S2), und
- Skalieren einer Streckenlänge der Navigationsroute (30) des zweiten Kraftfahrzeugs (22) auf eine Streckenlänge der Referenz-Navigationsroute (28, S3);
- Festlegen von mindestens einem Streckenabschnitt der Referenz-Navigationsroute (28), der ein vorgegebenes Homogenitätskriterium erfüllt, als synchronisierbarer Streckenabschnitt; wobei das vorgegebene Homogenitätskriterium ein vorgegebenes Mindestmaß an Übereinstimmung eines Streckenverlaufs des Streckenabschnitts der Referenz-Navigationsroute (28) mit einem Streckenverlauf eines Streckenabschnitts der skalierten Navigationsroute (30) vorgibt (S5),
- Zuordnen des Streckenabschnitts der skalierten Navigationsroute (30) zu dem synchronisierbaren Streckenabschnitt (S10),
- Bereitstellen eines Ausgabeinhalts, der eine virtuelle Reise auf einer virtuellen Navigationsroute beschreibt, die die Referenz-Reisedauer und den Streckenverlauf der Referenz-Navigationsroute (28) repräsentiert (S11), zum Ausgeben durch die Virtuelle-Realität-Ausgabevorrichtung (18) während der Fahrt des ersten Kraftfahrzeugs (20),
- falls sich das erste Kraftfahrzeug (20) auf einem synchronisierbaren Streckenabschnitt befindet und falls sich das zweite Kraftfahrzeug (22) auf dem dem synchronisierbaren Streckenabschnitt zugeordneten Streckenabschnitt der skalierten Navigationsroute (30) befindet: Ändern des bereitgestellten Ausgabeinhalts (S12), wobei der geänderte Ausgabeinhalt einen Avatar beschreibt, der das zweite Kraftfahrzeug (22) und eine erfasste Kraftfahrzeugbewegung des zweiten Kraftfahrzeugs (22) repräsentiert.

2. Verfahren nach Anspruch 1, wobei das Verfahren die folgenden, durch die Synchronisiereinrichtung (12) durchgeführten Schritte aufweist:
- Festlegen mehrerer synchronisierbarer Streckenabschnitte (S4), wobei eine Sequenz der den jeweiligen synchronisierbaren Streckenabschnitten zugeordneten Streckenabschnitte der skalierten Navigationsroute (30) einer Sequenz der Streckenabschnitte der Referenz-Navigationsroute (28) entspricht.

3. Verfahren nach einem der vorhergehenden Ansprüche, wobei die Synchronisiereinrichtung (12) das Skalieren (S3) und/oder das Festlegen des mindestens einen Streckenabschnitts (S5) vor Beginn der Fahrt des ersten Kraftfahrzeugs (20) durchführt.

4. Verfahren nach einem der vorhergehenden Ansprüche, wobei das Verfahren die folgenden, durch die Synchronisiereinrichtung (12) durchgeführten Schritte aufweist:
- Feststellen einer Geschwindigkeitsänderung des ersten Kraftfahrzeugs (20) und/oder Feststellen einer Geschwindigkeit des zweiten Kraftfahrzeugs (22, S13),
wobei das Skalieren der Navigationsroute (30, S3) des zweiten Kraftfahrzeugs (22) bei einer und in Abhängigkeit von der festgestellten Geschwindigkeitsänderung erfolgt.

5. Verfahren nach einem der vorhergehenden Ansprüche, wobei der synchronisierbare Streckenabschnitt keine Richtungsänderung und/oder keine Kurve aufweist.

6. Verfahren nach einem der vorhergehenden Ansprüche, wobei das vorgegebene Homogenitätskriterium einen Grenzwert für eine Kurvigkeit und/oder einen Grenzwert für einen Abstand der Navigationsrouten (28, 30) zueinander beschreibt.

7. Verfahren nach einem der vorhergehenden Ansprüche, wobei die Synchronisiereinrichtung (12), falls sich das erste Kraftfahrzeug (20) nicht auf einem synchronisierbaren Streckenabschnitt befindet: Ändern des bereitgestellten Ausgabeinhalts (S12), wobei der geänderte Ausgabeinhalt anstelle des Avatars ein Anzeigeobjekt (32) beschreibt, das sich unabhängig von der erfassten Kraftfahrzeugbewegung des zweiten Kraftfahrzeugs (22) bewegt oder statisch erscheint.

8. Synchronisiereinrichtung (12), die dazu eingerichtet ist, ein Verfahren nach einem der Ansprüche 1 bis 7 durchzuführen.

9. Kraftfahrzeug (20, 22), aufweisend eine Synchronisiereinrichtung (12) nach Anspruch 8.

10. Virtuelle-Realität-Ausgabevorrichtung (18), aufweisend eine Synchronisiereinrichtung (12) nach Anspruch 8.

11. Datenservereinrichtung (10) zum Betreiben im Internet, aufweisend eine Synchronisiereinrichtung (12) nach Anspruch 8.

## Claims

1. A method for operating a virtual reality output device (18), which is associated with a first motor vehicle (20), wherein the method comprises the following steps performed by a synchronizing device (12):
- ascertaining a planned navigation route of the first motor vehicle (20) as a reference navigation route (28, S1),
- determining a second motor vehicle (22), wherein a planned navigation route (30) of the second motor vehicle (22) satisfies a preset synchronization condition; wherein the preset synchronization condition presets that a duration of a travel of the second motor vehicle (22) on the navigation route (30) thereof is within a preset tolerance range around a reference trip duration of a travel of the first motor vehicle (20) on the reference navigation route (28, S2), and
- scaling a track length of the navigation route (30) of the second motor vehicle (22) to a track length of the reference navigation route (28, S3);
- determining at least one track section of the reference navigation route (28), which satisfies a preset homogeneity criterion, as a synchronizable track section; wherein the preset homogeneity criterion presets a preset minimum of coincidence of a track layout of the track section of the reference navigation route (28) with a track layout of a track section of the scaled navigation route (30) (S5),
- associating the track section of the scaled navigation route (30) with the synchronizable track section (S10),
- providing an output content, which describes a virtual trip on a virtual navigation route, which represents the reference trip duration and the track layout of the reference navigation route (28) (S11), for outputting by the virtual reality output device (18) during the travel of the first motor vehicle (20),
- if the first motor vehicle (20) is on a synchronizable track section and if the second motor vehicle (22) is on the track section of the scaled navigation route (30) associated with the synchronizable track section: changing the provided output content (S12), wherein the changed output content describes an avatar, which represents the second motor vehicle (22) and a captured motor vehicle movement of the second motor vehicle (22).

2. The method according to claim 1, wherein the method comprises the following steps performed by the synchronizing device (12):
- determining multiple synchronizable track sections (S4), wherein a sequence of the track sections of the scaled navigation route (30) associated with the respective synchronizable track sections corresponds to a sequence of the track sections of the reference navigation route (28).

3. The method according to any one of the preceding claims, wherein the synchronizing device (12) performs scaling (S3) and/or determining the at least one track section (S5) before the start of the travel of the first motor vehicle (20).

4. The method according to any one of the preceding claims, wherein the method comprises the following steps performed by the synchronizing device (12):
- ascertaining a speed change of the first motor vehicle (20) and/or ascertaining a speed of the second motor vehicle (22, S13),
wherein scaling the navigation route (30, S3) of the second motor vehicle (22) is effected upon a and depending on the ascertained speed change.

5. The method according to any one of the preceding claims, wherein
the synchronizable track section does not comprise a change of direction and/or a curve.

6. The method according to any one of the preceding claims, wherein the preset homogeneity criterion describes a limit value for a curviness and/or a limit value for a distance of the navigation routes (28, 30) to each other.

7. The method according to any one of the preceding claims, wherein the synchronizing device (12), if the first motor vehicle (20) is not on a synchronizable track section: changing the provided output content (S12), wherein the changed output content describes a display object (32) instead of the avatar, which moves or seems static independently of the captured motor vehicle movement of the second motor vehicle (22).

8. A synchronizing device (12), which is configured to perform a method according to any one of claims 1 to 7.

9. A motor vehicle (20, 22) comprising a synchronizing device (12) according to claim 8.

10. A virtual reality output device (18) comprising a synchronizing device (12) according to claim 8.

11. A data server device (10) for operating in the Internet, comprising a synchronizing device (12) according to claim 8.

## Revendications

1. Procédé pour faire fonctionner un dispositif de sortie de réalité virtuelle (18) affecté à un premier véhicule à moteur (20), le procédé comportant les étapes suivantes réalisées par un dispositif de synchronisation (12) :
- déterminer un itinéraire de navigation planifié du premier véhicule à moteur (20) comme itinéraire de navigation de référence (28, S1),
- définir un second véhicule à moteur (22), un itinéraire de navigation planifié (30) du second véhicule à moteur (22) satisfaisant à une condition de synchronisation prescrite ; la condition de synchronisation prescrite spécifiant qu'une durée d'un trajet du second véhicule à moteur (22) sur l'itinéraire de navigation (30) est dans une plage de tolérance prescrite autour d'une durée de voyage de référence d'un trajet du premier véhicule à moteur (20) sur l'itinéraire de navigation de référence (28, S2), et
- mettre à l'échelle une longueur de tronçon de l'itinéraire de navigation (30) du second véhicule à moteur (22) par rapport à une longueur de tronçon de l'itinéraire de navigation de référence (28, S3) ;
- définir au moins un tronçon de l'itinéraire de navigation de référence (28) satisfaisant à un critère d'homogénéité prescrit comme étant un tronçon synchronisable ; le critère d'homogénéité prescrit (S5) spécifiant un degré de correspondance minimal prescrit d'un profil de trajet du tronçon de l'itinéraire de navigation de référence (28) avec un profil de trajet d'un tronçon de l'itinéraire de navigation mis à l'échelle (30),
- affecter le tronçon de l'itinéraire de navigation mis à l'échelle (30) au tronçon synchronisable (S10),
- fournir un contenu de sortie décrivant un voyage virtuel sur un itinéraire de navigation virtuel qui représente (S11) la durée de voyage de référence et le profil de trajet de l'itinéraire de navigation de référence (28) en vue d'une sortie par le dispositif de sortie de réalité virtuelle (18) pendant le trajet du premier véhicule à moteur (20),
- si le premier véhicule à moteur (20) est sur un tronçon synchronisable et si le second véhicule à moteur (22) est sur le tronçon de l'itinéraire de navigation mis à l'échelle (30) affecté au tronçon synchronisable : changer (S12) le contenu de sortie fourni, le contenu de sortie changé décrivant un avatar qui représente le second véhicule à moteur (22) et un mouvement de véhicule à moteur détecté du second véhicule à moteur (22).

2. Procédé selon la revendication 1, le procédé comportant les étapes suivantes réalisées par le dispositif de synchronisation (12) :
- définir (S4) plusieurs tronçons synchronisables, une séquence des tronçons de l'itinéraire de navigation mis à l'échelle (30) affectés aux tronçons synchronisables respectifs correspondant à une séquence des tronçons de l'itinéraire de navigation de référence (28).

3. Procédé selon l'une des revendications précédentes, dans lequel le dispositif de synchronisation (12) réalise la mise à l'échelle (S3) et/ou la définition du au moins un tronçon (S5) avant un début du trajet du premier véhicule à moteur (20).

4. Procédé selon l'une des revendications précédentes, le procédé comportant les étapes suivantes réalisées par le dispositif de synchronisation (12) :
- déterminer une variation de vitesse du premier véhicule à moteur (20) et/ou déterminer une vitesse du second véhicule à moteur (22, S13),
le trajet de navigation (30, S3) du second véhicule moteur (22) étant mis à l'échelle lors et en fonction d'une variation de vitesse déterminée.

5. Procédé selon l'une des revendications précédentes, dans lequel le tronçon synchronisable ne comporte aucun changement de direction et/ou aucun virage.

6. Procédé selon l'une des revendications précédentes, dans lequel le critère d'homogénéité prescrit décrit une valeur limite pour une sinuosité et/ou une valeur limite pour une distance des itinéraires de navigation (28, 30) les uns par rapport aux autres.

7. Procédé selon l'une des revendications précédentes, dans lequel si le premier véhicule à moteur (20) n'est pas sur le tronçon synchronisable, le dispositif de synchronisation (12) : change le contenu de sortie fourni (S12), le contenu de sortie changé décrivant un objet d'affichage (32) à la place de l'avatar, lequel objet d'affichage apparaît statique ou en mouvement indépendamment du mouvement de véhicule à moteur détecté du second véhicule à moteur (22).

8. Dispositif de synchronisation (12) configuré pour mettre en œuvre un procédé selon l'une des revendications 1 à 7.

9. Véhicule à moteur (20, 22) comportant un dispositif de synchronisation (12) selon la revendication 8.

10. Dispositif de sortie de réalité virtuelle (18), comportant un dispositif de synchronisation (12) selon la revendication 8.

11. Dispositif serveur de données (10) destiné à fonctionner sur Internet, comportant un dispositif de synchronisation (12) selon la revendication 8.
